# EUROPEAN PATENT SPECIFICATION

(11) **EP 1 533 991 B1**
(45) Date of publication and mention of the grant of the patent: **13.03.2013**
(21) Application number: 04017776.8
(22) Date of filing: 27.07.2004
(51) Int. Cl.: H04N 1/32

(54) **Image processing device and communication terminal device**
Bildverarbeitungsgerät und Kommunikationsendgerät
Appareil pour traitement d'images et dispositif terminal de communication

(30) Priority: 12.08.2003 JP 2003292100; 18.08.2003 JP 2003294348
(43) Date of publication of application: 25.05.2005
(73) Proprietor: MURATA KIKAI KABUSHIKI KAISHA, Minami-ku Kyoto-shi Kyoto 601 (JP)
(72) Inventor: Hirakawa, Hiroyuki, Kyoto-shi Kyoto (JP)
(74) Representative: Liedl, Christine

(56) References cited:
- EP-A- 1 133 153
- US-A1- 2001 013 954

## Description

### Background of the Invention

### Field of the Invention

The present invention relates to an image processing device which is connected to a central processing unit via a bus and carries out an image processing operation on image data obtained via the bus, and also to a communication terminal device including such an image processing device.

### Description of the Related Art

A device such as a facsimile machine, a copy machine, a printer and a Multi-Function Peripheral (MFP) combining these machines or the like includes a Central Processing Unit (CPU), an input unit, an image processing unit, a memory and an output unit as main components. The CPU controls the operation of the device as a whole. The input unit obtains image data from a remote device. The image processing unit executes various image processing operations on the obtained image data. The memory temporarily stores the image data. The output unit outputs the processed image data to a remote device.

Each of the CPU, the input unit, the image processing unit, the memory and the output unit is implemented by a plurality of printed-circuit boards having Large Scale Integration (LSI) circuits that performs a prescribed operation. The LSIs mounted on the printed-circuit boards are electrically connected to one another by signal lines. In accordance with a control signal from the CPU, functions of the device as a whole are implemented. Further, in a conventional communication terminal device that includes a main board and a plurality of peripheral circuit boards, the CPU, the image processing unit and the memory are mounted on the main board. The plurality of peripheral circuit boards are specifically a scanner board, a printer board, a communication control board and an operation panel or the like.

Recently, accompanying the downsizing of each of the above-described devices, the size of the printed-circuit boards that constitute each of the devices is attempted to be downsized. Therefore, it is necessary to efficiently mount on a prescribed printed-circuit board, each of the LSIs that implements the CPU, the input unit, the image processing unit, the memory and the output unit or the like.

An image processing LSI that constitutes the image processing unit includes a plurality of input-output ports. Each of the plurality of the input-output ports is connected to external pins provided on a semiconductor package and sealed by synthetic resin or the like to form the image processing LSI. Conventionally, the image processing LSI has been implemented generally by a Quad Flat-leaded Package (QFP) typed LSI. The number of the external pins of the QFP typed LSI is small, i.e. approximately 200 pins. Therefore, there is a limit in the number of the external pins that can be connected with the input-output ports.

Since there is a limit in the number of the external pins, to connect the image processing LSI to all other hardware components, it is necessary to route an external bus along the image processing LSI. For example, when the image memory is disposed to an opposite side of the input-output port on the printed-circuit board, to connect the input-output port and the image memory, it is necessary to route the external bus along the image processing LSI at an outer side of the image processing LSI. Therefore, there are drawbacks that a length of the routed external bus becomes long and a mounted area of the entire printed-circuit board becomes large. In addition, accompanying the lengthening of the external bus, there is a drawback that a countermeasure against noise is required for a signal transmitted and received between the image processing LSI and the image memory LSI.

Moreover, a conventional MFP includes a CPU which controls an operation of the MFP as a whole. The CPU controls each of the hardware components connected via a system bus. For example, a Read Only Memory (ROM), a Random Access Memory (RAM), a codec, a system memory, a Universal Serial Bus (USB) interface, a Network Control Unit (NCU) , a modem, a display unit, an operation unit and a printing unit are connected to the system bus.

The MFP also includes an image bus to which a scanner unit and an image memory are connected. The scanner unit can carry out both a monochrome scanning process and a color scanning process. The codec, which is connected to the system bus, is also connected to the image bus. An exclusive interface circuit is provided between the system bus and the image bus for connecting the system bus and the image bus. A signal can be transmitted and received between the system bus and the image bus by the exclusive interface circuit.

In the above-described MFP, when the codec is provided exclusive for monochrome image data, in case of executing a monochrome facsimile communication, the codec executes an encoding process as follows. Specifically, monochrome image data obtained by the scanning process is stored into the image memory via the image bus. Next, in accordance with a control from the CPU, the monochrome image data retrieved from the image memory is input into the codec, and after the monochrome image data is encoded by the codec, the monochrome image data is stored into the system memory via the system bus. Furthermore, in accordance with the control from the CPU, the monochrome image data retrieved from the system memory is transmitted to a remote facsimile machine or the like via the modem and the NCU.

Meanwhile, when operating the MFP as a network scanner, in case of transmitting color scanned data to a remote computer, the codec exclusive for the monochrome image data does not execute the encoding process. Specifically, the color scanned data obtained by the scanner unit is stored into the image memory via the image bus. Next, in accordance with the control from the CPU, the color scanned data retrieved from the image memory is stored into the system memory via the exclusive interface circuit and the system bus. Furthermore, in accordance with the control from the CPU, the color scanned data retrieved from the system memory is transmitted to a remote computer via the USB interface.

As described above, the cost of the MFP can be reduced by providing only an inexpensive codec to be used in the monochrome facsimile communication and not providing an expensive codec for the color image data. However, in this case, as described above, when executing the color network scanning process, an exclusive interface circuit becomes necessary for transferring the color scanned data, which cannot be processed by the codec, from the image memory to the system memory. Further, the codec includes an encoding mode and a through mode. Under the encoding mode, an encoding process is executed on the input data and the encoded data is output. Under the through mode, an encoding process is not executed on the input data and the input data is output as it is.

### Summary of the Invention

The present invention has been made in consideration to the above-described circumstances. A first advantage of the present invention is to provide an image processing device which, by shortening a length of the wiring used in communicating with each of hardware components mounted on a printed-circuit board, reduces a mounted area of the printed-circuit board and reduces a generation of noise in the wiring that connects each of the hardware components.

A second advantage of the present invention is to provide a device which can eliminate an interface circuit exclusive for transmission and reception of data between an image bus and a system bus by efficiently switching an encoder (codec) between an encoding mode and a through mode.

To accomplish the first advantage, an image processing device includes a first input-output unit connected to a first external bus, a second input-output unit connected to a second external bus, an internal bus which connects the first input-output unit and the second input-output unit, and a codec connected to an internal bus. The internal bus can operate as a through path for passing image data without intervening with an image processing unit between the first input-output unit and the second input-output unit. The image processing unit executes an image processing operation on the image data input from one of the first input-output unit and the second input-output unit. Then, the image processing unit can output the processed image data from another one of the first input-output unit and the second input-output unit.

The image processing device is formed of a ball grid typed Large Scale Integration (LSI) circuit.

The image processing device can be switched between a through mode and an image processing mode by a Central Processing Unit (CPU) connected to the first external bus. Under the through mode, the internal bus operates as the through path. Under the image processing mode, the image processing unit executes an image processing operation on the image data input from one of the first input-output unit and the second input-output unit, and the processed image data is output from another one of the first input-output unit and the second input-output unit.

To accomplish the first advantage, the communication terminal device includes a main control board, a communication control board, a scanner board, a printer board and a first external bus. The first external bus connects the main control board, the communication control board, the scanner board and the printer board. The main control board includes a CPU, an image processing device and an image memory. The CPU and the image processing device are connected to the first external bus.

The image processing device includes the first input-output unit, the second input-output unit, the internal bus and the codec (the image processing unit) . The first external bus is connected to the first input-output unit. The image memory is connected to the second input-output unit via the second external bus. The internal bus connects the first input-output unit and the second input-output unit. The internal bus can operate as a through path between the first input-output unit and the second input-output unit.

The image processing device can be switched between the through mode and the image processing mode by a control of the CPU. Under the through mode, the image data is passed through between the first input-output unit and the second input-output unit without intervening with the image processing unit. Under the image processing mode, the image processing unit executes an image processing operation on the image data input from one of the first input-output unit and the second input-output unit, and the processed image data is output from another one of the first input-output unit and the second input-output unit.

In a copy operation or a facsimile transmission operation or the like, when storing the scanned image data from the scanner board into the image memory, first, the image processing device is set under the image processing mode (encoding process mode) . Then, the scanned image data from the scanner board is input from the first input-output unit into the image processing device. Subsequently, the image processing unit executes an image processing operation (encoding process) on the scanned image data. The processed scanned image data is output from the second input-output unit via the second external bus to the image memory.

In a facsimile reception operation or the like, when storing received image data received from another communication terminal device via a communication line into the image memory, first, the image processing device is set under the through mode. Then, the received image data from the communication control board is input from the first input-output unit into the image processing device. Next, without an image processing operation being executed by the image processing unit, the received image data is output from the second input-output unit via the second external bus to the image memory.

In the copy operation or the facsimile reception operation or the like, when retrieving the image data stored in the image memory and outputting the retrieved image data to the printer board and printing out an image, first, the image processing device is set under the image processing mode (decoding process mode) . Then, the image data from the image memory is input from the second input-output unit into the image processing unit. Subsequently, the image processing unit executes an image processing operation (decoding process) on the image data. The processed image data is output from the first input-output unit via the first external bus to the printer board.

According to the image processing device of the present invention, the internal bus that can operate as the through path is provided. As a result, unnecessary wiring for connecting each of the hardware components mounted on the printed-circuit board can be eliminated. Thus, the length of the wiring that connects each of the hardware components can be shortened. In addition, the mounted area on the printed-circuit board can be reduced. Furthermore, a generation of noise in the wiring that communicates with each of the hardware components can be reduced.

The image processing device of the present invention is formed of a Ball Grid Array (BGA) typed LSI. Therefore, compared with the LSI employing the QFP having approximately the same size and approximately the same pitch between adjacent external pins, a number of external pins (input-output ports) for connecting the image processing device to a remote device can be increased. Therefore, without routing the wiring outside, the first input-output unit and the second input-output unit can be connected directly via the internal bus easily.

To accomplish the second advantage, a communication terminal device according to the present invention includes an obtaining unit for obtaining image data, an encoder, an output unit for outputting the image data to a remote device, a selecting unit for selecting a first condition or a second condition and a control unit. When the selecting unit selects the first condition, the control unit controls the encoder to encode the image data obtained by the obtaining unit. When the selecting unit selects the second condition, the control unit controls the encoder to pass the image data obtained by the obtaining unit.

When the obtaining unit obtains monochrome image data, the selecting unit selects the first condition. When the obtaining unit obtains color image data, the selecting unit selects the second condition. The encoder is connected to the obtaining unit via a first bus and connected to the output unit via a second bus. The communication terminal device includes a first bus controller and a second bus controller. The first bus controller controls the image data output from the obtaining unit to be transferred to the encoding unit via the first bus. The second bus controller controls the image data output from the encoder to be transferred to the output unit via the second bus.

According to the communication terminal device of the present invention, when the monochrome image data is obtained and the first condition is selected, the encoder encodes the obtained monochrome image data. When the color image data is obtained and the second condition is selected, the encoder passes the obtained color image data without carrying out the encoding process. Accordingly, the monochrome image data to be encoded and the color image data not to be encoded can be transferred through the same path via the encoder. Therefore, it is not necessary to provide separately an interface circuit exclusive for passing the color image data that is not necessary to be encoded. By controlling the transfer process for inputting the obtained image data into the encoder and the transfer process for inputting the image data output from the encoder into the output unit by different controllers respectively, each of the data transfer processes can be carried out at high speed.

### Brief Description of the Drawings

Fig. 1 is a block diagram showing a configuration of a communication terminal device according to a first embodiment of the present invention.
Fig. 2 is a block diagram showing an example of installation of hardware mounted on a main control board according to the first embodiment of the present invention.
Fig. 3 is a block diagram showing a configuration of a communication terminal device according to a second embodiment of the present invention.
Fig. 4 is a flowchart showing a transmission process procedure according to the second embodiment of the present invention.

### Detailed Description of the Preferred Embodiments

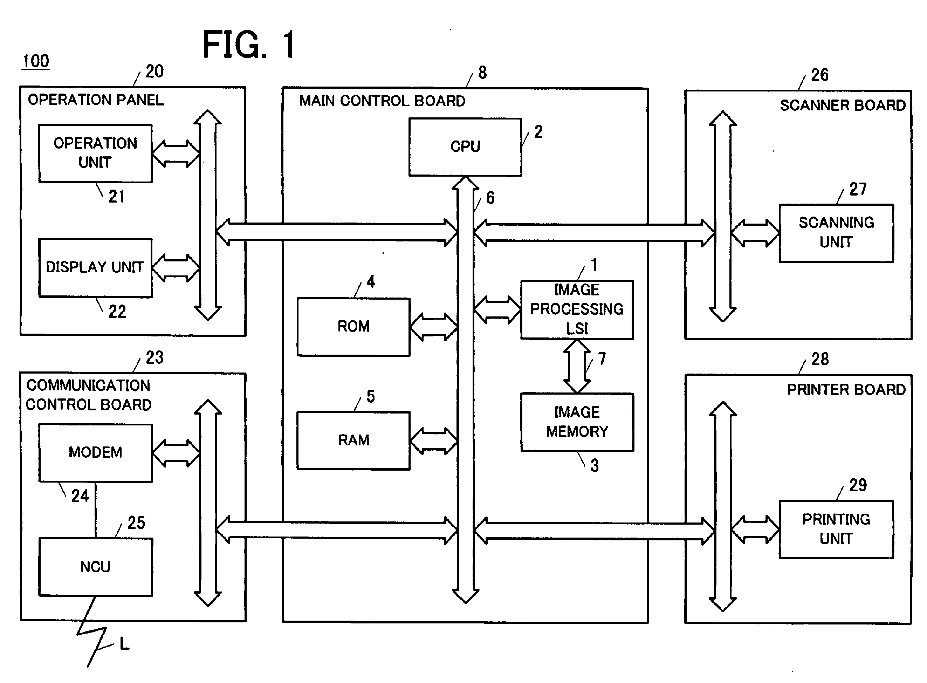

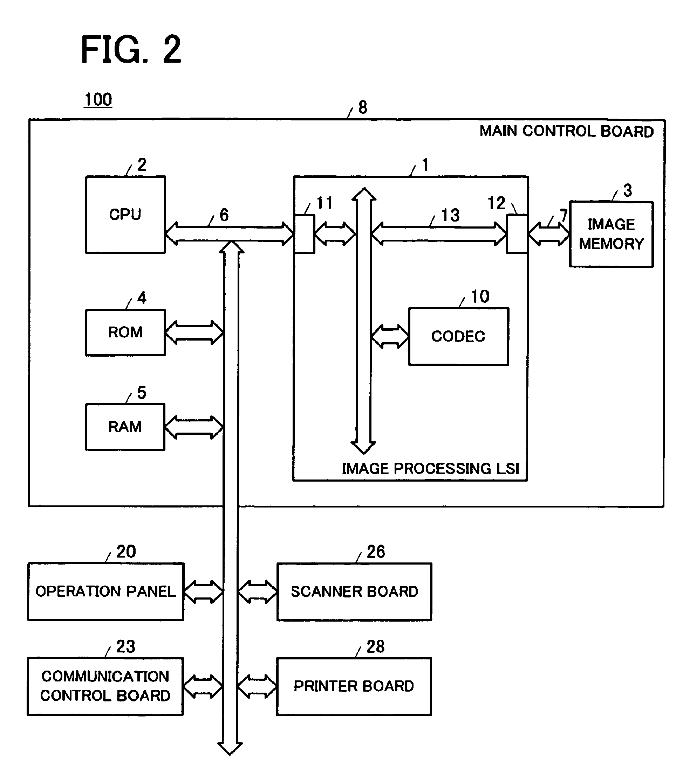

Referring to Fig. 1 and Fig. 2, a first embodiment of the present invention will be described. Fig. 1 is a block diagram showing an example of a configuration of a communication terminal device including an image processing device according to the present invention. In Fig. 1 and Fig. 2, reference numeral 100 denotes a communication terminal device. The communication terminal device 100 includes a main control board 8, an operation panel 20, a communication control board 23 connected to a Public Switched Telephone Network (PSTN) L, a scanner board 26 and a printer board 28. The main control board 8 constitutes a control board of the communication terminal device as a whole. The operation panel 20, the communication control board 23, the scanner board 26 and the printer board 28 constitute peripheral circuit boards connected to the main control board 8.

The main control board 8 includes a Central Processing Unit (CPU) 2, a Read Only Memory (ROM) 4, a Random Access Memory (RAM) 5, an image processing LSI (image processing device) 1 and an image memory 3. The CPU 2 is a central processor which controls the operation of the entire device 100. The ROM 4 stores various control programs or the like necessary for the operation as a facsimile machine 100. The RAM 5 is formed of a Static RAM (SRAM), a flash memory or the like. The RAM 5 temporarily stores data that is generated when the CPU 2 executes various control programs. The image processing LSI (image processing device) 1 encodes image data scanned from an image of an original document. The image memory 3 is formed of a Dynamic RAM (DRAM) or the like. The image memory 3 stores the image data encoded by the image processing LSI 1. The image memory 3 also stores image data received by a facsimile communication from another facsimile machine via the PSTN L.

The CPU 2, the image processing LSI 1, the ROM 4 and the RAM 5 are connected to one another via an external bus 6 (first external bus). The image processing LSI 1 and the image memory 3 are connected to one another via an external bus 7 (second external bus). The external buses 6 and 7 are formed of wirings formed on the main control board 8.

The communication control board 23 includes a Network Control Unit (NCU) 25 and a modem 24. The NCU 25 carries out a connection control on the PSTN L. The modem 24 modulates and demodulates a signal for carrying out a facsimile communication. When carrying out a facsimile communication with another facsimile machine via the PSTN L, the NCU 25 establishes a connection between the modem 24 and the PSTN L in accordance with a control signal obtained from the CPU 2 on the main control board 8 via the external bus 6. The operation panel 20 includes an operation unit 21 and a display unit 22. The operation unit 21 includes a ten-key numeric pad and various function keys necessary for operating the device 100. The display unit 22 is formed of a Liquid Crystal Display (LCD) or the like. The operation panel 20 transmits and receives a control signal and a data signal between the operation panel 20 and the CPU 2 on the main control board 8 via the external bus 6.

The scanner board 26 includes a scanning unit 27. For example, the scanning unit 27 includes a Charge Coupled Device (CCD) sensor and a light source. The light source irradiates light on an image of an original document to be scanned by the CCD sensor. The scanning unit 27 also includes a motor or the like for feeding out an original document. In accordance with a control signal obtained from the CPU 2 via the external bus 6, the scanner board 26 scans an image of an original document and outputs the scanned image data via the external bus 6 to the main control board 8.

The printer board 28 includes a printing unit 29. For example, the printing unit 29 includes a thermal head for printing an image onto recording paper in accordance with the image data. The printing unit 29 also includes a motor or the like for feeding out the recording paper. The printer board 28 prints onto the recording paper of a prescribed size as a hardcopy, the image data obtained from the main control board 8 via the external bus 6.

In the above-described communication terminal device 100, each of the hardware components of the communication control board 23, the operation panel 20, the scanner board 26 and the printer board 28 is connected to the main control board 8 via the external bus 6. The hardware components mounted on each of the units 23, 20, 26 and 28 execute a prescribed process in accordance with the control signal from the CPU 2 via the external bus 6. Accordingly, the communication terminal device 100 can operate as the MFP.

Fig. 2 is a block diagram showing an example of installation of hardware components mounted on the main control board 8. The image processing device 1 relating to the present invention is formed of a ball grid typed Large Scale Integration (LSI) circuit. Although not shown in the drawing, the image processing LSI 1 is sealed by a ball grid array typed semiconductor package having approximately 500 external pins consisting of solder balls. The image processing LSI 1, the ROM 4 and the RAM 5 mounted on the main control board 8 are provided in proximity to the CPU 2. This configuration is adopted because the image processing LSI 1, the ROM 4 and the RAM 5 transmit and receive a control signal with the CPU 2 more frequently than the image memory 3. In other words, the frequency of the transmission and the reception of signals between the CPU 2 and the image processing LSI 1, the ROM 4 and the RAM 5 is higher than the frequency of the transmission and the reception of signals between the CPU 2 and the image memory 3. As described above, as shown in Fig. 2, the CPU 2, the image processing LSI 1, the ROM 4 and the RAM 5 are provided in proximity to one another on the main control board 8 and connected to one another via the external bus 6.

Meanwhile, due to reasons such as the size of the main control board 8 and the relationship with other hardware, it is difficult to provide the image memory 3 in proximity to the CPU 2. In the present embodiment, as shown in Fig. 2, the image processing LSI 1 is provided between the CPU 2 and the image memory 3. That is, at both sides of the image processing LSI 1, the CPU 2 is provided at one side and the image memory 3 is provided at another side.

The image processing LSI 1 includes an input-output unit 11 (a first input-output unit) , a codec 10 (an image processing unit) , an input-output unit 12 (a second input-output unit) and an internal bus 13. The input-output unit 11 is formed of an input-output port connected to the external bus 6. The input-output port is connected to each of the solder balls that constitute the external pins of the semiconductor package. The codec 10 executes an encoding process and/or a decoding process on the image data input from the input-output unit 11, and outputs the processed image data to the input-output unit 12.

The codec 10 executes an encoding process and/or a decoding process on the image data input from the input-output unit 12, and outputs the processed image data to the input-output unit 11. The input-output unit 12 is formed of an input-output port connected to the external bus 7. The external bus 7 is connected to the image memory 3. The input-output port is connected to each of the solder balls that constitute the external pins of the semiconductor package. In the image processing LSI 1, the input-output unit 11, the codec 10 and the input-output unit 12 are connected to one another via the internal bus 13.

Next, a description will be made to an operation carried out when an image of an original document is scanned by the scanning unit 27 of the scanner board 26 and the scanned image data is stored into the image memory 3 under an encoded state. That is, in accordance with the control signal from the CPU 2 via the external bus 6, the image processing LSI 1 of the main control board 8 obtains from the input-output unit 11 via the external bus 6, the scanned image data obtained by scanning the image of the original document by the scanning unit 27. Then, the image processing LSI 1 inputs the obtained image data into the codec 10 via the internal bus 13. The codec 10 encodes image data input via the internal bus 13 and outputs the encoded image data from the input-output unit 12 via the internal bus 13. The encoded image data output from the input-output unit 12 is stored into the image memory 3 via the external bus 7.

In accordance with the control signal from the CPU 2, the image processing LSI 1 can be switched between an image processing mode and a through mode. Under the image processing mode, as described above, after executing an image processing operation (encoding process) on the image data input from the input-output unit 11, the processed (encoded) image data is output from the input-output unit 12. Meanwhile, under the through mode, the image data input from the input-output unit 11 is output from the input-output unit 12 as it is. That is, under the through mode, an image processing operation (encoding process) is not executed on the image data input from the input-output unit 11, and the image data is output to the input-output unit 12. As described above, in the image processing LSI 1, the internal bus 13 can operate as the through path.

For example, the image processing LSI 1 operates under the through mode when receiving a facsimile. That is, when receiving the facsimile, the modem 24 and the NCU 25 on the communication control board 23 obtain image data received from a remote facsimile machine via the PSTN L. The received image data is encoded data. The obtained received image data is input via the external bus 6 from the input-output unit 11 to the image processing LSI 1. Then, the obtained received image data is output from the input-output unit 12 via the internal bus 13 as it is. The image data output from the input-output unit 12 is stored into the image memory 3 via the external bus 7.

When printing the encoded image data stored in the image memory 3 onto the recording paper or the like, the following operations are carried out. First, the image data (the encoded data) stored in the image memory 3 is input into the image processing LSI 1 via the external bus 7 by a control of a main controller. The main controller controls in accordance with a control signal from the CPU 2. The main controller receives the control signal from the CPU 2 via the external bus 6, the internal bus 13 and the external bus 7.

Next, the image processing LSI 1 inputs the image data (encoded data) obtained from the input-output unit 12 into the codec 10 via the internal bus 13. The codec 10 decodes the image data and outputs the decoded image data from the input-output unit 11 via the internal bus 13. The image data (decoded image data) output from the input-output unit 11 is output to the printer board 28 via the external bus 6. The printing unit 29 of the printer board 28 prints out an image onto the recording paper in accordance with the received image data.

As described above, according to the first embodiment, by providing the internal bus 13 as the through path in the image processing LSI 1, an external bus becomes unnecessary for connecting the CPU 2 and the image memory 3 located away from the CPU 2. That is, a signal can be transmitted and received between the CPU 2 and the image memory 3 via the internal bus 13 of the image processing LSI 1. Since it is not necessary to route the wiring (external bus) outside of the image processing LSI 1, an area of the main control board 8 as a whole can be reduced. Accordingly, the communication terminal device 100 as a whole can be downsized. Furthermore, since the length of the wiring can be shortened, a countermeasure against noise can be simplified and the circuitry can be designed easily.

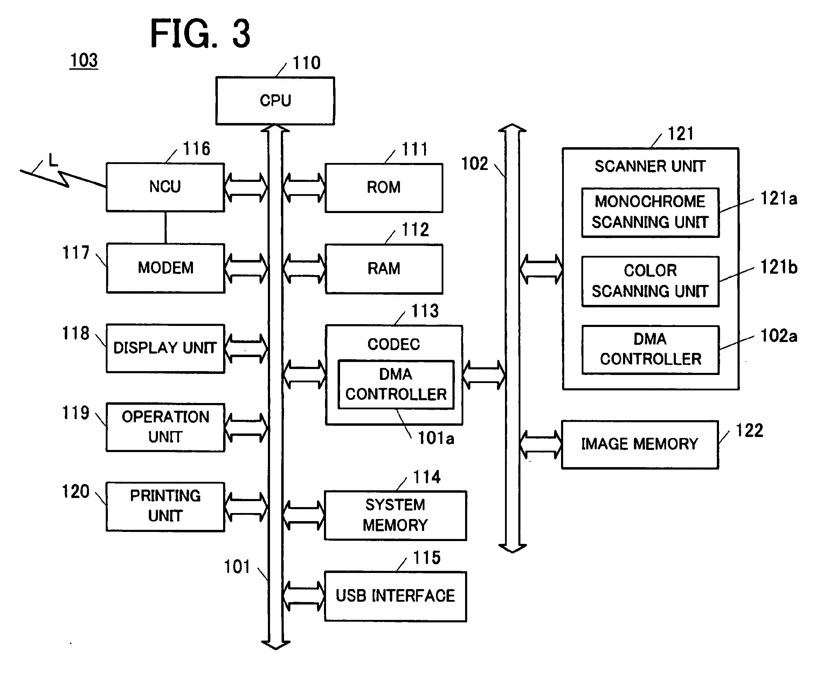

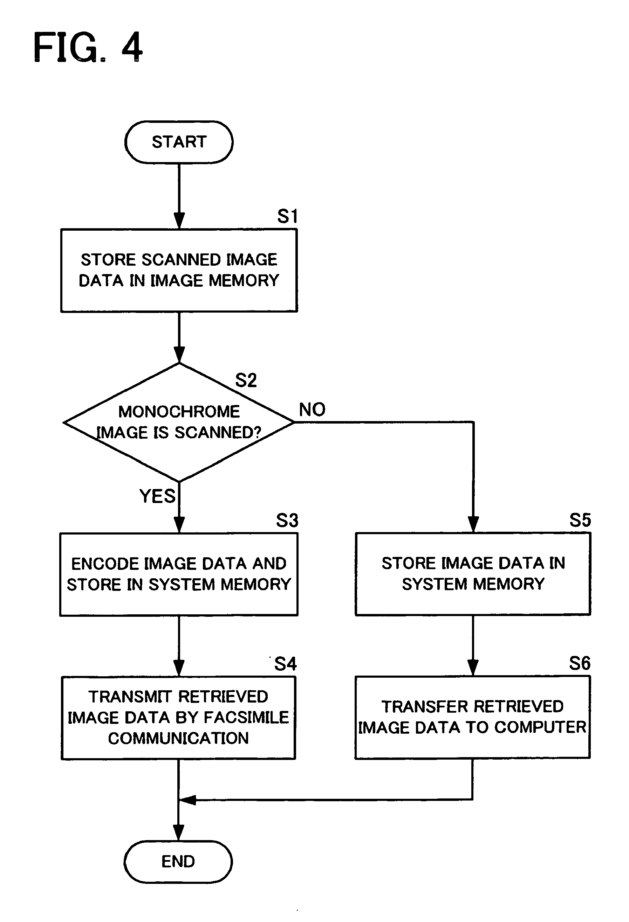

Next, referring to Fig. 3 and Fig. 4, a second embodiment of the present invention will be described. An MFP having a copy function, a facsimile function, a network scanner function and a network printer function will be described as an example of a communication terminal device. Fig. 3 is a block diagram showing a configuration of the MFP according to the second embodiment. In Fig. 3, reference numeral 103 denotes an MFP as the communication terminal device. The MFP 103 includes a CPU 110 that controls an operation of the MFP 103 as a whole. The CPU 110 controls each of the hardware components connected via a system bus (second bus) 101. Functions of the MFP 103 are implemented by each of the hardware components. A ROM 111, a RAM 112, a codec 113, a system memory 114, a Universal Serial Bus (USB) interface 115, an NCU 116, a modem 117, a display unit 118, an operation unit 119 and a printing unit 120 or the like are connected to the system bus 101, other than the CPU 110. Further, the USB interface 115 is used for connecting the MFP 103 to a remote computer or the like.

The ROM 111 stores in advance, various control programs or the like necessary for the operation of the MFP 103. The RAM 112 is formed of an SRAM, a flash memory or the like. The RAM 112 temporarily stores data or the like that is generated when the CPU 110 executes the control program. The modem 117 is formed of a faxmodem which can carry out a facsimile communication. The modem 117 is connected directly to the NCU 116. The NCU 116 is connected to the PSTN L. When necessary, the NCU 116 establishes a connection between the modem 117 and the PSTN L, and the NCU 116 can carry out a facsimile communication with another facsimile machine via the PSTN L.

The display unit 118 is formed of an LCD or the like. The display unit 118 displays an operation status of the MFP 103, data to be notified to a user and characters or the like input from the operation unit 119. The operation unit 119 includes a ten-key numeric pad, a fax button, a scanner button and various function keys necessary for operating the MFP 103. The fax button is operated when the user uses the MFP 103 as a facsimile machine. The scanner button is operated when the user uses the MFP 103 as a network scanner. Further, by forming the display unit 118 as a touch panel, a part or all of the various keys of the operation unit 119 can be substituted. The printing unit 120 is, for example, an electro-photographic printer device. The printing unit 120 prints out an image onto the recording paper as a hardcopy in accordance with the image data stored in the system memory 114.

The codec 113 is connected to both the system bus (second bus) 101 and an image bus (first bus) 102. A scanner unit 121 and an image memory 122 are connected to the image bus 102. The image memory 122 stores the image data obtained by the scanner unit 121. For example, the scanner unit 121 can operate as an obtaining unit which scans an original document by a scanner using a CCD and obtains the image data. The obtained image data is once stored into the image memory 122 via the image bus 102. Further, the scanner unit 121 of the MFP 103 of the second embodiment includes a monochrome scanning unit 121a and a color scanning unit 121b. The monochrome scanning unit 121a scans an image of an original document as monochrome image data and obtains monochrome binary data. The color scanning unit 121b scans an image of an original document as color image data and obtains color multilevel data. In other words, the scanner unit 121 can scan both monochrome image data and color image data.

The image memory 122 is formed of a DRAM or the like. The image memory 122 temporarily stores image data scanned by the monochrome scanning unit 121a or the color scanning unit 121b. The image data stored in the image memory 122 is retrieved to the codec 113 via the image bus 102 under a prescribed timing. The codec 113 can operate as an encoder which carries out an encoding process on the monochrome image data (binary data) input from the image memory 122.

In accordance with the control from the CPU 110, the codec 113 encodes the image data retrieved from the image memory 122 or without encoding, stores the image data into the system memory 114 via the system bus 101. The system memory 114 is formed of a DRAM or the like. The system memory 114 stores image data obtained from the codec 113 via the system bus 101. For example, the codec 113 encodes the monochrome binary data by Modified Huffman (MH), Modified Read (MR), Modified Modified Read (MMR) or Joint Bi-level Image experts Group (JBIG) coding methods or the like.

In the MFP 103 having the above-described configuration, the following operations are carried out when the user carries out a monochrome facsimile communication by using the MFP 103 as the facsimile machine. First, the user places an original document on a prescribed document placing table (not shown) and operates the fax button of the operation unit 119. In this case, the MFP 103 scans an image of the original document as a monochrome image by the monochrome scanning unit 121a of the scanner unit 121. Then, the scanned monochrome image data is stored once in the image memory 122 via the image bus 102 under an uncompressed state (not-encoded state) .

The uncompressed monochrome image data (binary data) is input into the codec 113 via the image bus 102. The codec 113 encodes the input monochrome image data and stores the encoded image data into the system memory 114 via the system bus 101. Then, the encoded data retrieved from the system memory 114 is transmitted by the facsimile communication to a remote facsimile machine through the modem 117 and the NCU 116 as the output unit. The above-described series of operations are carried out in accordance with the control of the CPU 110.

Meanwhile, the following operations are carried out when using the MFP 103 as a network scanner and transferring the scanned color image data to a remote computer (a personal computer, etc.), in other words, when executing a color network scanning process. Further, an appropriate interface such as a serial transfer and a parallel transfer can be used for transferring the image data to the remote computer.

First, the user places an original document on a prescribed document placing table and operates the scanner button of the operation unit 119. In this case, the MFP 103 scans an image of the original document as a color image by the color scanning unit 121b of the scanner unit 121. Then, the scanned color image data is stored once into the image memory 122 via the image bus 102 under the uncompressed state (not-encoded state).

The uncompressed color image data (multilevel data) is input into the codec 113 via the image bus 102. The codec 113 passes the input color image data through the internal bus under the uncompressed state without executing the encoding process. The color image data passed through the codec 113 is stored into the system memory 114 under the uncompressed state. Then, the color image data retrieved from the system memory 114 is transmitted to the remote computer by the USB interface 115 as the output unit. The above-described series of operations are carried out in accordance with the control of the CPU 110.

Further, when transferring the monochrome image data obtained by scanning the image of the original document to the remote computer, in other words, when executing a monochrome network scanning process, the monochrome image data obtained by scanning by the monochrome scanning unit 121a is stored once in the image memory 122. Then, the monochrome image data is passed through the codec 113 and transferred to the system memory 114. Subsequently, the image data (under the uncompressed state) retrieved from the system memory 114 can be transmitted to the remote computer via the USB interface 115.

As described above, in accordance with the operation of a prescribed button (the fax button or the scanner button) of the operation unit 119, the CPU 110 operates as a selecting unit which selects a first scanning condition (first condition) or a second scanning condition (second condition). Under the first scanning condition, an image of an original document is scanned by the monochrome scanning unit 121a. Under the second scanning condition, an image of an original document is scanned by the color scanning unit 121b. The CPU 110 operates as the control unit which controls whether or not to encode the image data retrieved from the image memory 122 by the codec 113 in accordance with the selected scanning condition.

Specifically, the CPU 110 inputs to the codec 113, an instruction signal indicating whether or not to instruct an execution of an encoding process on the image data retrieved from the image memory 122. In accordance with the instruction signal from the CPU 110, the codec 113 is switched between an encoding mode and a through mode. Under the encoding mode, an encoding process is executed on the image data input from the input-output port, and the encoded image data is output to the output port. Under the through mode, an image processing operation is not executed on the image data input from the input port and the image data is output from the output port as it is.

Further, the MFP 103 of the second embodiment includes a Direct Memory Access (DMA) controller (second bus controller) 101a. The DMA controller 101a is provided in the codec 113 and controls a DMA transfer process of the image data on the system bus 101. By obtaining an exclusive right for using the system bus 101 from the CPU 110, the DMA controller 101a carries out a DMA transfer via the system bus 101. For example, the DMA controller 101a controls a data transfer between the codec 113 and the system memory 114, a data transfer between the system memory 114 and the USB interface 115 and a data transfer between the system memory 114 and the modem 117.

The MFP 103 includes a DMA controller (first bus controller) 102a. The DMA controller 102a is provided in the scanner unit 121 and controls a DMA transfer process of the image data on the image bus 102. By obtaining an exclusive right for using the image bus 102, the DMA controller 102a carries out a DMA transfer via the image bus 102. For example, the DMA controller 102a controls a data transfer between the scanner unit 121 and the image memory 122 and a data transfer between the image memory 122 and the codec 113. The data transfer process via the image bus 102 can be carried out efficiently by the DMA controller 102a.

Next, a description will be made of an operation when transmitting to a remote device, the image data obtained by scanning an image of an original document by the scanner unit 121 in the MFP 103 of the second embodiment. Fig. 4 is a flowchart showing a transmission process procedure carried out by the MFP 103 according to the second embodiment of the present invention.

First, when a user places an original document on a prescribed document placing table and a prescribed button of the operation unit 119 is operated, the CPU 110 controls to execute a scanning process of an image of the original document by one of the monochrome scanning unit 121a and the color scanning unit 121b of the scanner unit 121. The scanned image data is stored in the image memory 122 under the uncompressed state via the image bus 102 (step S1).

Specifically, when the fax button of the operation unit 119 is operated (when a monochrome facsimile transmission is instructed) , the CPU 110 controls to execute the monochrome scanning process on the image of the original document by the monochrome scanning unit 121a of the scanner unit 121. Meanwhile, when the scanner button of the operation unit 119 is operated (when a color scanning is instructed), the CPU 110 controls to execute the color scanning process on the image of the original document by the color scanning unit 121b of the scanner unit 121. The scanned image data obtained by the scanning process is stored into the image memory 122 by the control of the DMA controller 102a.

Next, the CPU 110 determines whether or not the scanning process of the monochrome image has been executed at step S1 (step S2). When the scanning process of the monochrome image has been executed (step S2: YES), the CPU 110 inputs an instruction signal for instructing the codec 113 to execute the encoding process. The codec 113 executes an encoding process (compressing process) on the uncompressed monochrome image data retrieved from the image memory 122. The compressed monochrome image data is stored into the system memory 114 (step S3). Then, the CPU 110 retrieves the image data (compressed data) stored in the system memory 114. The retrieved image data is transmitted to a facsimile machine of a designated destination by the facsimile communication via the modem 117 and the NCU 116 (step S4).

Meanwhile, at step S2, when the scanning process of the monochrome image has not been executed (step S2: NO), in other words, when the scanning process of the color image has been executed, the CPU 110 inputs an instruction signal for instructing the codec 113 to not execute the encoding process. By inputting an instruction signal for instructing to pass the image data, the codec 113 is set under the through mode. The uncompressed color image data retrieved from the image memory 122 is stored into the system memory 114 without being encoded (step S5). Then, the CPU 110 retrieves the uncompressed color image data from the system memory 114. The retrieved image data is transferred to the remote computer via the USB interface 115 (step S6).

In the MFP 103 of the second embodiment, the transfer process for transferring the image data output from the codec 113 to the system memory 114 and the transfer process for transferring the image data retrieved form the system memory 114 to the modem 117 or the USB interface 115 can be carried out at a high speed by controlling the transfer processes by the DMA controller 101a, which obtained an exclusive right for using the system bus 101 from the CPU 110.

In the image bus 102, the transfer process for transferring the scanned image data scanned by the scanner unit 121 to the image memory 122 and the transfer process for transferring the image data retrieved from the image memory 122 to the codec 113 can be executed at a high speed by controlling an exclusive right for using the image bus 102 by the DMA controller 102a.

As described above, the color image data, which cannot be encoded by the monochrome codec 113, is stored into the system memory 114 by being passed through the codec 113, which connects the system bus 101 and the image bus 102. As a result, the image data necessary to be encoded (for example, the monochrome image data for the facsimile transmission) and the image data not necessary to be encoded (for example, the color image data to be transferred to the remote computer by the serial transfer or the parallel transfer) can be processed in the same path. Thus, an exclusive interface circuit for passing the image data not to be encoded by the codec 113 becomes unnecessary to be provided separately. As a result, an unnecessary circuit can be eliminated.

## Claims

1. A communication terminal device, comprising:
• a main control board (8);
• a communication control board (23) which is connected to a communication line (4) and carries out data communication with another communication terminal device;
• a scanner board (26) including a scanning unit and outputs scanned image data obtained by scanning an image of an original document to the main control board;
• a printer board (28) including a printing unit (29) and prints out image data obtained from the main control board; and
• a first external bus (6) which connects the main control board (8), the communication control board (23), the scanner board (26) and the printer board (28);
• wherein the main control board (8) includes a central processing unit (2) which is connected to the first external bus (6), an image processing device (1) which is connected to the first external bus (6), and an image memory (3); and
• the image processing device (1) includes
- a first input-output unit (11) which is connected to the first external bus (6),
- a second input-output unit (7) which is connected to the image memory (3) via a second external bus (7),
• an internal bus (13) connecting the first input-output unit (11), the second input-output unit (12) and an image processing unit (10), wherein the internal bus (13) operates as a through path between the first input-output unit (11), the second input-output unit (12), and the image processing unit (10);
**characterised in that**
the image processing unit (10) is a codec which executes an encoding process and/or a decoding process on the image data, the image processing device (1) can be switched between a through mode and an image processing mode, and under the through mode, the internal bus (13) operates as the through path, and under the image processing mode, after the codec (10) executes the image processing operation on the image data input from one of the first input-output unit (11) and the second input-output unit (13), the processed image data is output from the other one of the first input-output unit and the second input-output unit, and the central processing unit (2) switches the image processing device (1) between the through mode and the image processing mode.

2. The communication terminal according to claim 1, wherein the image processing device (1) is formed of a Large Scale Integration (LSI) circuit.

3. The communication terminal according to claim 2, wherein the image processing device (1) is formed of a ball grid array typed LSI.

4. The communication terminal device according to claim 1, wherein when storing the scanned image data from the scanner board (26) into the image memory (3), the central processing unit (2) sets the image processing device (1) under the image processing mode, and under the image processing mode, after the codec (10) executes the image processing operation on the scanned image data input from the first input-output unit (11), the image processing device (1) outputs the processed scanned image data from the second input-output unit (12).

5. The communication terminal device according to claim 1, wherein when storing received image data received from another communication terminal device via the communication line into the image memory (3), the central processing unit (2) sets the image processing device (1) under the through mode, and under the through mode, the image processing device (1) outputs the received image data from the second input-output unit (7) without executing the image processing operation on the received image data input from the first input-output unit (11).

6. The communication terminal device according to claim 1, wherein when retrieving the image data stored in the image memory and outputting the image data to the printer board (28) and printing out the image, the central processing unit (2) sets the image processing device (1) under the image processing mode, and under the image processing mode, after the image processing unit executes the image processing operation on the image data input from the second input-output unit (7), the image processing device (1) outputs the processed image data from the first input-output unit (11).

7. The communication terminal device according to claim 1, wherein the central processing unit (1) switches the image processing device (1) into the through mode when the image data contains monochrome image data and into the image processing mode when the image data contains colour image data.

## Patentansprüche

1. Kommunikationsendvorrichtung, enthaltend:
- eine Hauptsteuerungsplatine (8);
- eine Kommunikationssteuerungsplatine (23), die mit einer Kommunikationsleitung (4) verbunden ist und Datenkommunikation mit einer anderen Kommunikationsendvorrichtung durchführt;
- eine Abtasterplatine (26), die eine Abtasteinheit aufweist und abgetastete Bilddaten, die durch Abtastung eines Bildes eines Originaldokuments erhalten werden, an die Hauptsteuerungsplatine ausgibt;
- eine Druckerplatine (28), die eine Druckeinheit (29) aufweist und von der Hauptsteuerungsplatine erhaltene Bilddaten ausdruckt; und
- einen ersten externen Bus (6), der die Hauptsteuerungsplatine (8), die Kommunikationssteuerungsplatine (23), die Abtasterplatine (26) und die Druckerplatine (28) verbindet;
- wobei die Hauptsteuerungsplatine (8) eine Zentraleinheit (2), die mit dem ersten externen Bus (6) verbunden ist, eine Bildverarbeitungseinrichtung (1), die mit dem ersten externen Bus (6) verbunden ist, und einen Bildspeicher (3) enthält; und
- die Bildverarbeitungsvorrichtung (1)
- eine erste Eingabe-Ausgabe-Einheit (11), die mit dem ersten externen Bus (6) verbunden ist,
- eine zweite Eingabe-Ausgabe-Einheit (7), die mit dem Bildspeicher (3) über einen zweiten externen (7) verbunden ist,
- einen internen Bus (13) enthält, der die erste Eingabe-Ausgabe-Einheit (11), die zweite Eingabe-Ausgabe-Einheit (12) und eine Bildverarbeitungseinheit (10) verbindet, wobei der interne Bus (13) als Durchgangspfad zwischen der ersten Eingabe-Ausgabe-Einheit (11), der zweiten Eingabe-Ausgabe-Einheit (12) und der Bildverarbeitungseinheit (10) arbeitet;
**dadurch gekennzeichnet, dass** die Bildverarbeitungseinheit (10) ein Codec ist, welches einen Codierungsprozess und/oder einen Decodierungsprozess an den Bilddaten durchführt, die Bildverarbeitungseinrichtung (1) zwischen einem Durchgangsmodus und einem Bildverarbeitungsmodus umgeschaltet werden kann und in dem Durchgangsmodus der interne Bus (13) als der Durchgangspfad arbeitet und in dem Bildverarbeitungsmodus, nachdem das Codec (10) den Bildverarbeitungsvorgang an den entweder von der ersten Eingabe-Ausgabe-Einheit (11) oder der zweiten Eingabe-Ausgabe-Einheit (12) eingegebenen Bilddaten durchführt, die verarbeiteten Bilddaten von der jeweils anderen der ersten Eingabe-Ausgabe-Einheit und der zweiten Eingabe-Ausgabe-Einheit ausgegeben werden, und die Zentraleinheit (2) die Bildverarbeitungseinrichtung (1) zwischen dem Durchgangsmodus und dem Bildverarbeitungsmodus umschaltet.

2. Kommunikationsendvorrichtung nach Anspruch 1, bei welcher die Bildverarbeitungseinrichtung (1) aus einer Large Scale Integration-Schaltung (LSI) gebildet ist.

3. Kommunikationsendvorrichtung nach Anspruch 2, bei welcher die Bildverarbeitungseinrichtung (1) aus einer LSI der Kugelgitteranordnungs-Bauart gebildet ist.

4. Kommunikationsendvorrichtung nach Anspruch 1, bei welcher dann, wenn die abgetasteten Bilddaten von der Abtasterplatine (26) in dem Bildspeicher (2) gespeichert werden, die Zentraleinheit (2) die Bildverarbeitungseinrichtung (1) in den Bildverarbeitungsmodus setzt und in dem Bildverarbeitungsmodus, nachdem das Codec (10) den Bildverarbeitungsvorgang an den von der ersten Eingabe-Ausgabe-Einheit (11) eingegebenen abgetasteten Bilddaten durchführt, die Bildverarbeitungseinrichtung (1) die verarbeiteten abgetasteten Bilddaten aus der zweiten Eingabe-Ausgabe-Einheit (12) ausgibt.

5. Kommunikationsendvorrichtung nach Anspruch 1, bei welcher beim Speichern von empfangenen Bilddaten, die von einer anderen Kommunikationsendvorrichtung über die Kommunikationsleitung empfangen wurden, in dem Bildspeicher (3) die Zentraleinheit (2) die Bildverarbeitungseinrichtung (1) in den Durchgangsmodus setzt und in dem Durchgangsmodus die Bildverarbeitungseinrichtung (1) die empfangenen Bilddaten aus der zweiten Eingabe-Ausgabe-Einheit (7) ausgibt, ohne den Bildverarbeitungsvorgang an den von der ersten Eingabe-Ausgabe-Einheit (11) eingegebenen empfangenen Bilddaten durchzuführen.

6. Kommunikationsendvorrichtung nach Anspruch 1, bei welcher beim Abrufen der in dem Bildspeicher gespeicherten Bilddaten und Ausgeben der Bilddaten an die Druckerplatine (28) und Ausdrucken des Bildes die Zentraleinheit (2) die Bildverarbeitungseinrichtung (1) in den Bildverarbeitungsmodus setzt und im Bildverarbeitungsmodus, nachdem die Bildverarbeitungseinheit den Bildverarbeitungsvorgang an den von der zweiten Eingabe-Ausgabe-Einheit (7) eingegebenen Bilddaten durchführt, die Bildverarbeitungseinrichtung (1) die verarbeiteten Bilddaten aus der ersten Eingabe-Ausgabe-Einheit (11) ausgibt.

7. Kommunikationsendvorrichtung nach Anspruch 1, bei welcher die Zentraleinheit (2) die Bildverarbeitungseinrichtung (1) in den Durchgangsmodus umschaltet, wenn die Bilddaten monochrome Bilddaten enthalten, und in den Bildverarbeitungsmodus, wenn die Bilddaten Farbbilddaten enthalten.

## Revendications

1. Dispositif formant terminal de communication, comprenant :
• une carte de commande principale (8) ;
• une carte de commande de communication (23) qui est reliée à une ligne de communication (4) et qui effectue une communication de données avec un autre dispositif formant terminal de communication ;
• une carte de scanneur (26) incluant une unité de balayage et qui délivre des données d'image balayées obtenues en balayant une image d'un document original à la carte de commande principale ;
• une carte d'imprimante (28) incluant une unité d'impression (29) et qui imprime des données d'images obtenues en provenance de la carte de commande principale ; et
• un premier bus externe (6) qui relie la carte de commande principale (8), la carte de commande de communication (23), la carte de scanneur (26) et la carte d'imprimante (28) ;
• dans lequel la carte de commande principale (8) inclut une unité centrale de traitement (2) qui est reliée au premier bus externe (6), un dispositif de traitement d'images (1) qui est relié au premier bus externe (6) et une mémoire d'images (3) ; et
• le dispositif de traitement d'images (1) inclut :
- une première unité d'entrée/sortie (11) qui est reliée au premier bus externe (6),
- une seconde unité d'entrée/sortie (12) qui est reliée à la mémoire d'images (3) par l'intermédiaire d'un second bus externe (7),
- un bus interne (13) reliant la première unité d'entrée/sortie (11), la seconde unité d'entrée/sortie (12) et une unité de traitement d'images (10), dans lequel le bus interne (13) fonctionne comme un chemin traversant entre la première unité d'entrée/sortie (11), la seconde unité d'entrée/sortie (12) et l'unité de traitement d'images (10) ;
**caractérisé en ce que** :
l'unité de traitement d'images (10) est un codeur-décodeur qui exécute un processus de codage et/ou un processus de décodage sur les données d'images, le dispositif de traitement d'images (1) peut être commuté entre un mode traversant et un mode de traitement d'images, et, en mode traversant, le bus interne (13) fonctionne comme le chemin traversant et, en mode de traitement d'images, une fois que le codeur-décodeur (10) exécute l'opération de traitement d'images sur les données d'images saisies de l'une de la première unité d'entrée/sortie (11) et de la seconde unité d'entrée/sortie (13), les données d'images traitées sont délivrées par l'autre de la première unité d'entrée/sortie et de la seconde unité d'entrée/sortie, et l'unité centrale de traitement (2) commute le dispositif de traitement d'images (1) entre le mode traversant et le mode de traitement d'images.

2. Terminal de communication selon la revendication 1, dans lequel le dispositif de traitement d'images (1) est formé d'un circuit d'intégration à grande échelle (LSI).

3. Terminal de communication selon la revendication 2, dans lequel le dispositif de traitement d'images (1) est formé d'une matrice de billes de type LSI.

4. Dispositif formant terminal de communication selon la revendication 1, dans lequel, en stockant les données d'images balayées provenant de la carte de scanneur (26) dans la mémoire d'images (3), l'unité de traitement centrale (2) règle le dispositif de traitement d'images (1) en mode de traitement d'images, et en mode de traitement d'images, une fois que le codeur-décodeur (10) exécute l'opération de traitement d'images sur les données d'images balayées saisies de la première unité d'entrée/sortie (11), le dispositif de traitement d'images (1) délivre les données d'images balayées traitées en provenance de la seconde unité d'entrée/sortie (12).

5. Dispositif formant terminal de communication selon la revendication 1, dans lequel, en stockant les données d'images reçues en provenance d'un autre dispositif formant terminal de communication par l'intermédiaire de la ligne de communication dans la mémoire d'images (3), l'unité centrale de traitement (2) règle le dispositif de traitement d'images (1) en mode traversant, et en mode traversant, le dispositif de traitement d'images (1) délivre les données d'images reçues en provenance de la seconde unité d'entrée/sortie (12) sans exécuter l'opération de traitement d'images sur les données d'images reçues saisies de la première unité d'entrée/sortie (11).

6. Dispositif formant terminal de communication selon la revendication 1, dans lequel, en récupérant les données d'images stockées dans la mémoire d'images et en délivrant les données d'images à la carte d'imprimante (28) et en imprimant l'image, l'unité centrale de traitement (2) règle le dispositif de traitement d'images (1) en mode de traitement d'images, et en mode de traitement d'images, une fois que l'unité de traitement d'images exécute l'opération de traitement d'images sur les données d'image saisies de la seconde unité d'entrée/sortie (12), le dispositif de traitement d'images (1) délivre les données d'images traitées en provenance de la première unité d'entrée/sortie (11).

7. Dispositif formant terminal de communication selon la revendication 1, dans lequel l'unité centrale de traitement (1) commute le dispositif de traitement d'images (1) en mode traversant quand les données d'images contiennent des données d'images monochromes et en mode de traitement d'images quand les données d'images contiennent des données d'images en couleurs.
